# EUROPEAN PATENT SPECIFICATION

(11) **EP 1 838 811 B1**
(45) Date of publication and mention of the grant of the patent: **27.05.2015**
(21) Application number: 04798750.8
(22) Date of filing: 26.11.2004
(51) Int. Cl.: C10B 53/00

(54) **DEVICE FOR PYROLYZING RUBBER CHIPS AND SEPARATING THE GAINED PRODUCTS**
VORRICHTUNG ZUR PYROLYSE VON KAUTSCHUKSCHNITZELN UND TRENNUNG DER GEWONNENEN PRODUKTE
DISPOSITIF PERMETTANT D'EFFECTUER LA PYROLYSE DE COPEAUX DE CAOUTCHOUC ET DE SEPARER LES PRODUITS RECUPERES

(43) Date of publication of application: 03.10.2007
(73) Proprietor: New Energy Kft., H-2330 Dunaharaszti (HU)
(72) Inventor: SZINAY, Zoltán, H-1173 Budapest (HU); KISS, Ferenc, H-1062 Budapest (HU); CZAKÓ, Ferenc, H-2335 Taksony (HU)
(74) Representative: Krajnyák, András
(86) International application number: PCT/HU2004/000112
(87) International publication number: WO 2006/056818

(56) References cited:
- EP-A- 0 913 360
- WO-A-03/029384
- WO-A-2004/037949
- US-A- 5 286 374

## Description

### Technical Field

The invention relates to a device for pyrolyzing miscellaneous coarse rubber grinds containing mainly metal-rubber and for separating the gained products, said device comprising a mechanism for preparing and batching grinds, a pyrolysis reactor, burners located in its combustion chamber, an agitator mechanism, cooling mechanisms, supply lines, and units for treating and processing gases, liquids and solids.

### Background Of The Invention

As it is known, the problem of waste processing is becoming more and more important in these days partly in order to preserve the environment and partly because utilizable products applicable to various industrial purposes can be produced from waste materials and there are waste materials which can be utilized as secondary energy sources.

Usability of materials regained from waste and saving realized in this way speak for themselves, advantages are easily recognizable.

Primary energy resources are not fully available always and everywhere. Therefore provision with energy is often accompanied by -considerable costs. Understandably more and more researchers and users are dealing with the feasibility of cheap energy gained by waste utilization.

The above are of great importance also because the storage problems of the contaminants of the environment can be eliminated by the waste utilization while useful end products and energy are produced.

Among industrial waste materials rubber tyres and other technical rubber wares form special waste materials. As it is known, rubber is recorded as a particularly strong contaminant of the environment.

Attempts have been made already to recycle waste rubber comprising rubber tyres and other technical rubber wares. However, as usually it is not about homogeneous, selected materials herein, therefore it is difficult to obtain recyclable decomposition products of acceptable quality. It is noted that although production of recycling products of high purity from pure, homogeneous waste materials is known, this technology could not spread in large-scale.

In the art the reduction decomposition by pyrolysis, as well as the devices, i.e. the types of reactors belonging to the method are known for this purpose. In the case of these solutions a problem is arisen also by the inhomogeneity of the base material of the waste and further problems are posed by the question how to avoid the contamination of the environment during the implementation of the method.

The basic component of the devices used for pyrolysis is a vessel (a reactor), appropriate for heat-treating, which is usually arranged vertically. In this reactor decomposition processes are conducted by external heating, mostly sealed off from air.

For example US 4,846,082 describes a pyrolysis chamber arranged vertically having cone shaped top and bottom, the whole cone shaped bottom rotating so as to cause tyres charged without shredding and to be processed to move.

EP 913 360 describes a continuous method and a device for recovering purified activated carbon from waste tyres. The device comprises a pyrolysis chamber arranged vertically equipped with an agitator in its axis and having external heating. The embodiment applies specifically to producing activated carbon, the associative parts are not provided for obtaining liquid components of pure quality.

From US 5,423,950 a method and a reactor have been known for producing tyre oil. In this case the reactor is arranged vertically, the screw auger means therein, however, located horizontally, said auger means moving the filling and removing the remainder.

JP 56-065090 describes also a vertically arranged pyrolysis furnace in which waste tyres are charged without shredding. There is no agitator comprised in the device.

Further a frequently used device is the drum reactor processing fine grinds with high operating costs and complex auxiliary plants.

Experiments were conducted for processing coarse grinds in a retort with a high tubular chamber configuration wherein the rate of diameter and length has reached 1:4, however, grinds squeezed in the lower regions of these devices suppress the gas flow, therefore a uniform volume flow rate cannot be provided. Choking risk is very high in these types of devices. The bottom as well as the dome assemblies are small in size and often break down.

The filling contained in the pyrolysis chamber proportioned with the size of a kettle, forms fusion, blows due to the boiling and spouting-like escape of solid components towards separating/cooling system are frequent.

Additionally, pyrolysis devices for processing rubber grinds are known from WO 00/31212 and WO 03/ 029384, said devices comprising a reactor arranged vertically with special reactor, heating and dredging elements with improved configuration. WO 2004037949 discloses an apparatus for pyrolysis of shredded tyres, the apparatus comprising a reactor, an external casing at least partly surrounding the reactor, a combustion space between the external casing and the reactor, a rotatable agitating member arranged within the reactor, a discharging mechanism arranged at the bottom of the reactor, and a charging mechanism arranged at the top of the reactor, the charging mechanism comprising an upper slide-valve and a lower slide-valve. The charging mechanism is equipped with a liquid cooling above the lower slide-valve, and the lower slide-valve has a transfer opening with a diameter larger than that of a pipe end cross section leading the shredded tyre into the transfer opening. These embodiments were new and advantageous relating to the art when they were constructed, with the general development of the art, however, there is heed for more modern solutions, regarding particularly the protection of the environment and the quality of the obtained, recyclable products.

### Description of the Invention

The object of the present invention is to provide a device suitable for producing products in an environment saving manner from miscellaneous coarse rubber grinds containing mainly metal, quality of said products meeting the recent regulations, and this object can be achieved by operating the device without complex auxiliary plants.

The principle of the invention is that a batching gate valve suitable gas-proof locking is formed between its feeding system and inside chamber of its reactor as a lower bounding element of a cram screw; and the batching stub receiving the batching gate valve is in a lifted position related to the reactor due to the raised configuration of the neck of the dome; its agitator mechanism is constituted by an open-spiral worm and combined with a dredging element, a bundle of pipes is arranged on the wall of the reactor within its combustion chamber and it has a column with lines of screen plates for fine separating of liquid compounds.

The device preferably comprises a shredder with tearing discs for preparing the material to be processed, a sorting screen for sorting the material, a trough screw forwarding the material, and a bucket applicator.

The bucket applicator hopper is connected to a feeding screw after which a metering container having adjustable volume through its side plates is arranged.

The agitator mechanism having dredging elements expediently comprises a drive connected to a stuffing-box shaft.

The device may comprise more, concurrently operable reactors.

A vapour conduit is connected to a boiler, the lower member of its column containing screen plates and cooling elements, the screen plates are provided with barriers and have cooling pipes.

The device comprises two reflux cycles for obtaining liquid components.

The device may comprise a water cooler for condensing light distillates and an air cooler for separating heavy distillates.

The device preferably comprises a torch for blowing-off inert and incompressible gas components.

The device has means for obtaining metal residues from cooled slag.

The device according to the invention will be described in more details, by way of example, with reference to the drawings, wherein
Figure 1 is a flowchart;
Figure 2 shows the pre-treatment of the material to be processed;
Figure 3 shows the charging into the reactor and the reactor itself;
Figure 4 shows the condensing unit;
Figure 5a shows the screen plate, Figure 5b shows the cooling unit;
Figures 6 and 7 show gas-processing units;
Figure 8 shows solid product processing units;
Figure 9 shows the diagram of the reactor itself.

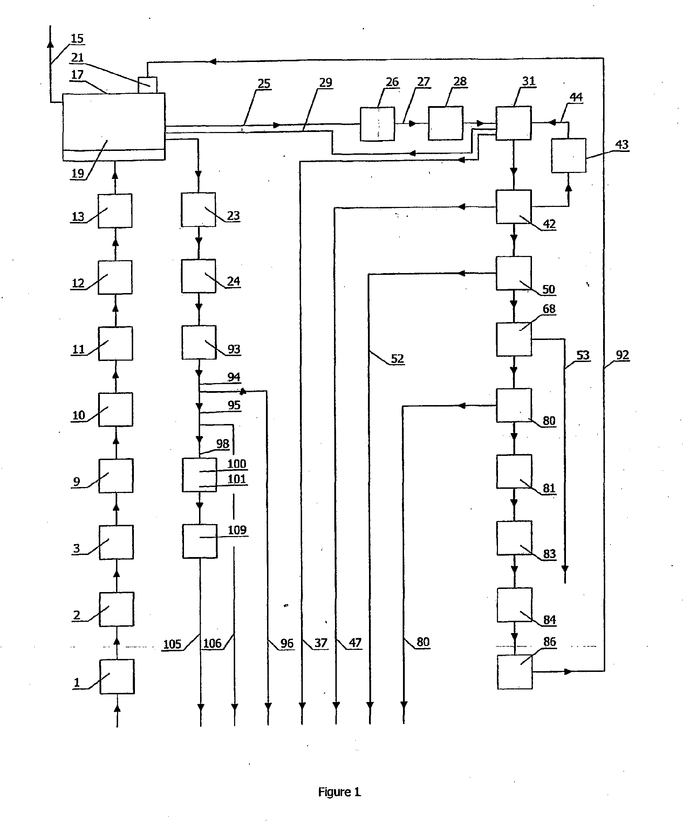

According to the Figures 1 to 9 the construction of the device is as follows.

The first component of the technological line is a ribbed conveyor 1 delivering pre-chips coming into the plant for processing, said conveyor is directed towards a shredder 2 with tearing discs under a maximum angle of 40 degree. The ribbed conveyor 1 preferably has such a hopper into which internal materials-handling means can be mounted, or it is suitable for feeding from a cargo vehicle. The shredder 2 with tearing discs has concurrent cylinders 3 onto which discs, designed shell-like, are mounted. The shell-like design is advantageous because in this way the discs are applicable to grab and cut between their edges the laminated pre-chips to the set size. The undersize grinds fall through a sorting screen 5, the oversize pieces are pushed to auxiliary cylinders 6 by auxiliary hydraulics 4, said auxiliary cylinders forwarding it onto the concurrent cylinders 3.

Grinds passing through the sorting screen 5 get into a trough 7 in the bottom of which an open trough screw 8 is located. The material is then forwarded to a bucket applicator 9 by the trough screw 8.

The bucket applicator 9 has a hopper and is connected to a feeding screw 10 after which a metering container 11 is arranged. The metering container 11 does not comprise any moving components, its volume can be adjusted by its side plates. Therefore the variable volume of the metering container 11 corresponds to the volume of the inside chamber 19 of the reactor 17.

The grinds are fed by a batching screw 12 to a cram screw 13 having a vertical axis, and its lower bounding element is formed by the batching gate valve 14. The batching screw 12 and the cram screw 13 having a vertical axis, are placed above the batching gate valve 14. The batching gate valve 14 which is substantially the lower bounding element of the cram screw 13, as it has been mentioned, is designed to be suitable for gas-proof locking between the feeding system and the inside chamber 19 of the reactor 17. The inside chamber 19 is arranged vertically; approximately 2/3 of its volume is filled by the chips to be processed, therefore inside chamber 19 is definitely of small gas space. Agitator mechanism 20 is dimensioned for continuous dollying of high-resistance materials, its revolution number can be adjusted electronically. The agitator mechanism 20 has a screw drive 22 connected to a stuffing-box shaft. A container 23 applied for dumping the slag is connected to the bottom of the inside chamber 19, gas-proof bounding element of which is constituted by the disc lock 30.

The combustion chamber 118 is suitable for providing the operating conditions of the block burners 21. A chimney stub 15 is formed in the upper part of the combustion chamber 118. A flue gas damper controlled mechanically is located after the chimney stub 15; the pressure conditions of the combustion chamber 118 are held unchanged within a wide range by the mid-gear position of the assembly. The lying chimney section 16 for collecting flue gas is formed as a condensation heat exchanger. The dome lid 18 is connected to the flange of the pulse tube 25 through a screw sealed joint.

The pulse tube 25 takes up also heat-dilatation and mechanical stress, there is no contaminant deposition in it. It is bound to a cyclone 26 horizontally and broadening. Solid contaminants are not separated on the wall of cyclone 26 by spinning of gases flowing slowly at a rate of 7 to 15 m/s and to this end plates are placed sectionally perpendicularly to the stream. The head of the cyclone 26 is bound into a vapour conduit 27, which delivers hot gases after branching towards a reflux container 28 and into a column 31. The vapour conduit 27 is connected to the lower member of the column 31 through screw-sealed flange, from which the heavy oils, already condensed in the vapour conduit 27 in liquid phase, fill the boiler 38. The boiler 38 has a heat insulation of basalt wool blanket, and in this way its heat capacity converts lighter distillates into gaseous state while maintaining the boiling. These distillates pass in crossflow with condensates dripping curtain like between the screen plates 36 of the lower line of plates towards packing 32. A part of the primary distillate condenses again in the stable temperature zone provided by packing 32 formed by Rushing rings and drips together with mechanical contaminants into the boiler 38 and screen plates 36, respectively. The gases and the oil vapours reaching the set temperature zone of middle oil fraction pass through the second section, in this way the overhead of the column 31 is a compound of distillates and real gases having a boiling point of less than 220 degrees centigrade.

A cooling unit I 40 is provided for cooling the column 31, said cooling unit having an outgoing stub 62 and a return stub 63.

Flanged stubs of instrumentation are formed in three sections of the column 31 defined by lower and upper flanges 59.

In the embodiment according to the drawings the screen plates 36 of column 31 are spaced from one another at most at 170 mm. The content of screen plate 36 bounded by barrier 55 is kept in liquid phase by the cooling water containing 30% glycol delivered in cooling pipe 57. The liquid drips through holes 56 onto the plate below, and finally a side conduit 37 of the lowest plate is connected to a receiver through a technological stirrer 45 and a conduit 46. A stub connected to an air cooler 42 is formed on the lid of column 31. The air cooler 42 is a standing register with smooth wall, without forced cooling.

There are provided three to six air coolers 42 depending on the desired product quality. The first air cooler 42 can be discharged into a reflux vessel 43 by bottom tapping, from there the material can be streamed into the boiler 38 through reflux conduit 44 by a pump. The middle oil distillate can be collected in the middle oil collecting pipe 48 by tapping the further air coolers 42.

The last air cooler 42 is connected to a likewise standing water cooler 50, which the water of cooling unit II 49 enters through the dome divided in two on the top. Water turns at the bottom and is cooled below the temperature of the pyrobenzine/gas compound flowing in the space around the bundle of pipes, i.e. the condensation point of real liquids, in this case to about 40 degrees centigrade.

To avoid corrosive effects the steel construction of the water cooler 50, as well as of the other elements of the cooling system are acid-proof. The pyrobenzine is discharged through conduit 52, and a Florentini vessel is provided for separating its water content. The separated liquid is carried into a collector 54 which should be blown off periodically.

The compound still containing benzine is delivered into a Venturi washer 64 through a conduit 51, the throttling element of said Venturi washer being mechanically adjustable. Nozzles spraying perpendicularly to gas stream are fed by a wash conduit 74. The gases travel from Venturi washer 64 into the medium section of a washer 65, then pass through the spray of a wash solution containing sodium hydroxide, generated by nozzles fed by wash conduits 73, and 75 and through packing zone 71 guaranteeing benzine condensation due to the spray catching function. The benzine is collected in the lower container 78, from where it is carried into the Florentini vessel 53. Wash conduits 73, 74 and 75 are fed from the lower container 78 by a pump and a lye container 68 is provided for storing 30% NaOH solution required for setting the pH, content of said lye container is charged by a membrane pump 66 according to the signals of a pH meter 76. A slurry pump 79 removes wash slurry gathered at the bottom of the lower container 78.

The pure gas travels to a first split spray catcher container, from where it moves into the compressor stage I 81 while its slop is carried into a slop tank 88. Gases from material coming from the first heat exchanger 82 and being compressible over 20 bars, turn liquid in the compressor stage II 84. A safety pipe is joined from spray catcher containers 80 and 83 to a torch 90. There are mixed phase gases in the gas tank 86, therefore the gases for utilization should be treated with a reducer-evaporator 91. A slop conduit is provided at the bottom of the gas tank 86, instruments and safety components are mounted on its dome. A slop pump 89 is provided for discharging the slop tank 88.

The device comprises a heat-proof screw feeder for discharging a first container 23 containing carbon black into a second carbon black container 93 and a conduit-pipe of the pneumatics 94 is provided for sucking the carbon black, and the mainstream of suction is provided by a carbon black blower 101. The steel remainder appearing in the pneumatic system of thin stream in wire-like structure is carried into a first iron tank 96. The fine powder delivered through the conduit 95 flows into a cyclone 100 through a bend 98. A magnetic separator 102 is applicable to treating the bottom product of cyclone 100. The carbon black, containing fine steel grits, is carried to a short conveyor through a batching tip, and before the dummy roll of said conveyor a constant magnetic zone is provided for separating the metal powder. The separated metal powder then is discharged into a container 106 through a conduit 104. A cellular feeder 103 is provided for feeding the metal free carbon black into a bin 105; the carbon black can be discharged from the bin 105 by a vehicle loader 107.

The excess air delivered by the carbon black blower 101 emerges through an exhauster 99 after leaving a filter 97.

Operation of the device will be described, by way of example, with reference to the processing of pre-chips being the average size of 20 to 50 mm and produced out of auto tyres.

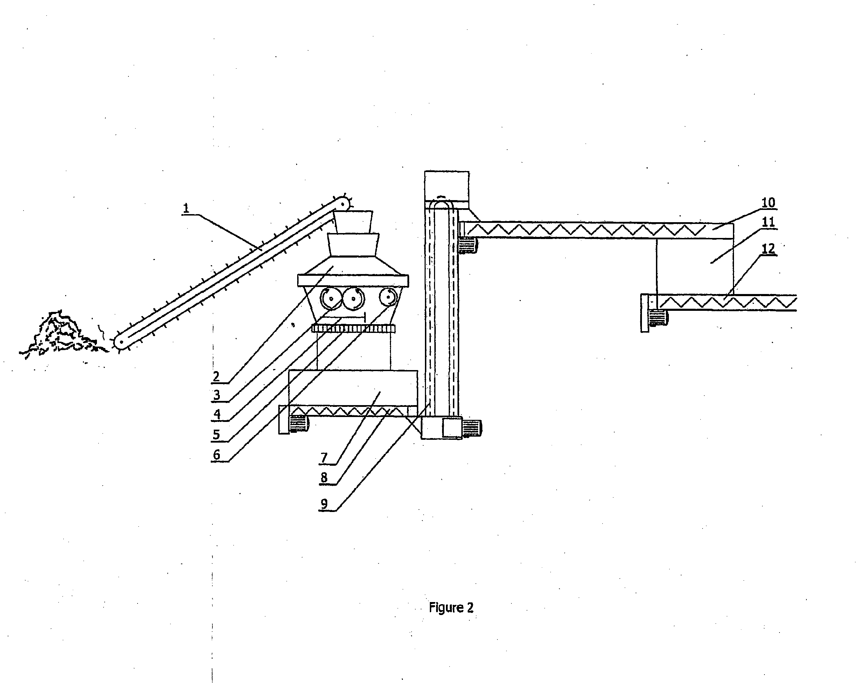

During the operation of conveyor 1 shown in Figure 2 the shredder 2 with tearing discs equipped with a sizer is filled continuously via stacking and hand feeding of the daily processing quantity. After applying, the spilling is prevented by the side guiding plates of conveyor 1, processing capacity of the shredder 2 with tearing discs being sufficient for servicing further apparatuses of the batching system. Dimensioning of the shredder 2 with tearing discs has been made by considering that concurrent cylinders 3 overcome the resistance of the chips and pre-chips being the specified size of 20 to 50 mm are produced on the edges of the discs. A water spray sprayer is located in the hopper, for avoiding frictional forces acting during the cutting, and warming-up the discs. The water introduced thereby into the technology does not affect the processing, as some percents of water are produced during the heat cracking.

The oversize pieces held back on the sorting screen 5 are pushed by the auxiliary hydraulics 4 to the auxiliary cylinder 6, which forwards them between the concurrent cylinders 3 and after a repeated grinding the size of the pre-chips becomes already appropriate.

The material falling continuously through the sorting screen 5 is not accumulated in the trough 7 because a trough screw 8 is located at the bottom of said trough 7 and the material to be processed is delivered into the hopper of the bucket applicator 9 by said trough screw 8. The material in the vessels of an elevating mechanism going round constantly is in loose condition and falls at the top point into the hopper of the feeding screw 10. The feeding screw 10 is open at its other end so the material to be processed is not piled up and the rotating batching system will not be seized. The metering container 11 is filled by the feeding screw 10 and the space between the side plates of said metering container 11 is adjusted by screw spacers to a volume corresponding to one processing cycle. Therefore the metering container 11 is adapted for batching function on volumetric principle. When an electromechanical level indicator indicates that the metering container 11 is filled up, the bucket applicator 9 and subsequently the feeding screw 10 will be stopped. The chips are forwarded to the reactor 17 then carried into the cram screw 13.

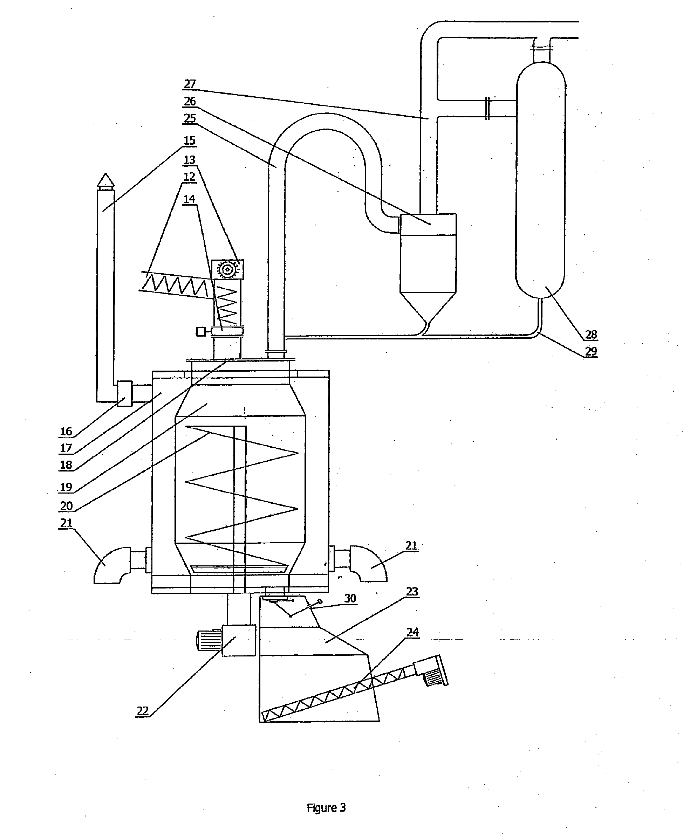

As shown in Figure 3 the inside chamber 19 of the reactor 17 is filled by means of the short cram screw 13 arranged vertically, in the open position of the batching gate valve 14 and backflow of the gases of the inside chamber 19 is prevented towards the batching system by the content of said cram screw 13.

To test the flange between the batching gate valve 14 and the cram screw, 13 nitrogen gas is introduced, and any leakage is indicated immediately by the decreasing of the nitrogen gas. Above a prescribed leakage level the processing is inhibited by the interlock circuit of the fire switch.

As- batching is finished the processing cycle is started by the gas-proof closing of the batching gate valve 14. The combustion chamber 118 fed with pyrogas and pyro-oil and heated by block burners 21 is heated up to 800 to 1000 degrees centigrade and heat transfer takes place through the wall of the inside chamber 19 towards the material to be processed in the inside chamber 19 filled approximately 2/3 of its volume.

The filling is agitated by the agitator mechanism 20 continuously until the end of the processing cycle when solid residue is discharged with a lower revolution number.

The reactor 17 is substantially an irradiated furnace; this structural solution has been found advantageous because of the small surface of the inside chamber 19 and the poor heat conduction of the rubber chips.

For efficient processing the low heating efficiency of 60% to 70% is increased by using condensation heat exchanger 16 mounted on the lying chimney. Energy of said heat exchanger may be used particularly for feed water supply of the plant. The flue gases are let out through the chimney stub 15 above the condensation point of hydrocarbons, i.e. at a temperature of 165 degrees centigrade.

Processes taking place in the reactor are as follows.

Thermolysis. In the present case the material is decomposed mainly into components with unsaturated C₂ to C₂0 chain, in a less degree into saturated and aromatic components and soot coal. At the end of the processing cycle the maximum volatile content of soot coal will be 6%. In the case the initial material is constituted by chips containing advanced steel, steel remainder will be found in the slag in the form of wire chips or metal powder. During the pyrolysis residual iron in the slag is decreased in a slight degree due to forming of FeS among reducing conditions, which, however, has an advantageously affects the sulphur content of the liquid and gas product. At the end of the processing cycle, after opening the disc lock 30, the slag being at the temperature of approximately 300 degrees centigrade is discharged under the revolving of the agitator mechanism 20, into the first container 23 applied for storing carbon black, while a butterfly valve mounted into the first vapour conduit 27, as well as the batching gate valve 14 is closed.

After a drawing of approximately 30 seconds the cycle is repeated.

The heat content of oil vapours and gases with a temperature of above 450 degrees centigrade let out from the inside chamber 19, entering the condensation system, is partly lost due to the shock heating, so said oil vapours and gases are let in the column 31 at the boiling point of the compound.

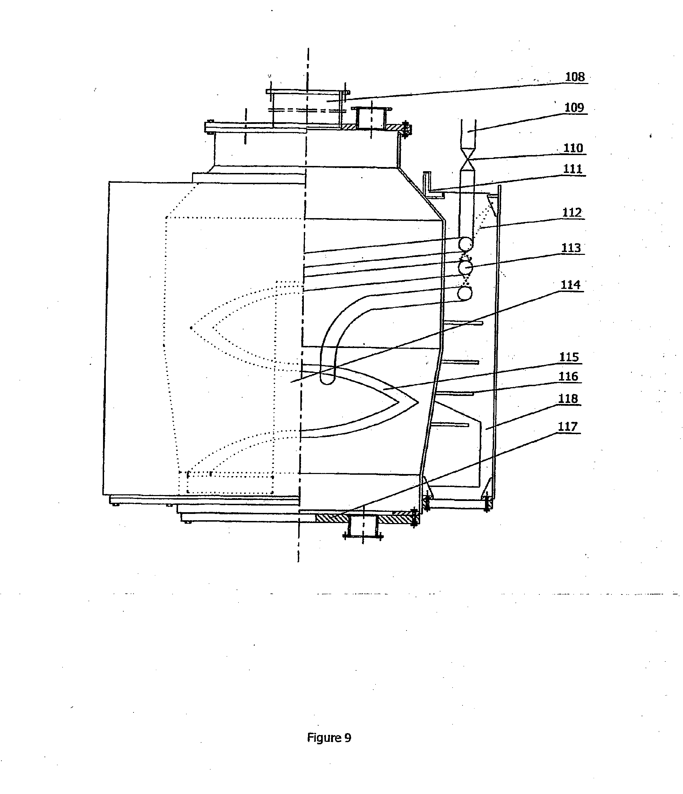

Solid contaminants of the gases in conjunction with condensates of heavy oils are trapped out and moved to an outside chamber through a joint conduit 29, then a conduit 109 of the bundle of pipes 113 built into the combustion chamber 118. Primary reflux cycle is based on operation of the system constituted by vapour conduit 27, reflux container 28 and joint conduit 29, further conduit 109, magnetic valve 110, bundle of pipes 113, inside chamber 19 and cyclone 26; details of which will be described with reference to Figure 9.

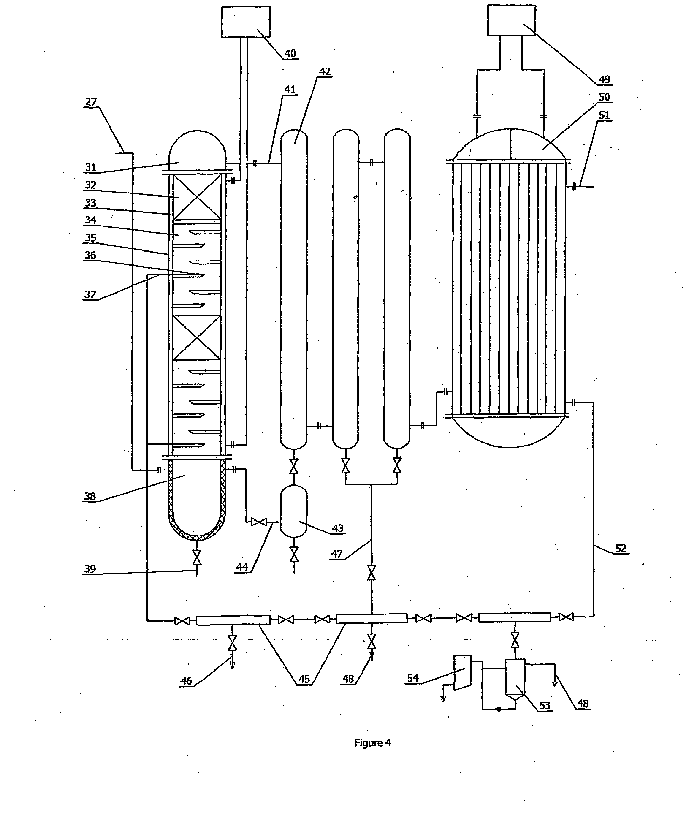

Through vapour conduit 27 shown in Figure 4 a mixed phase primary distillate passes into boiler 38 formed as the lower member of column 31. Components with higher boiling point remain in liquid phase. Smaller proportion of said components is entrained by the releasing steam and the outlet steam compound with a boiling point of 360 to 220 degrees centigrade is condensed in two fractions. Pressure condition are unchanged because processes of condensation/vaporization are in equilibrium. In the condensation system the initial vapour pressure of 40 to 70 mbar is decreased by just 1 to 4 mbar slightly by the slight resistance of said condensation system and flowing of pyrolytics flowing free.

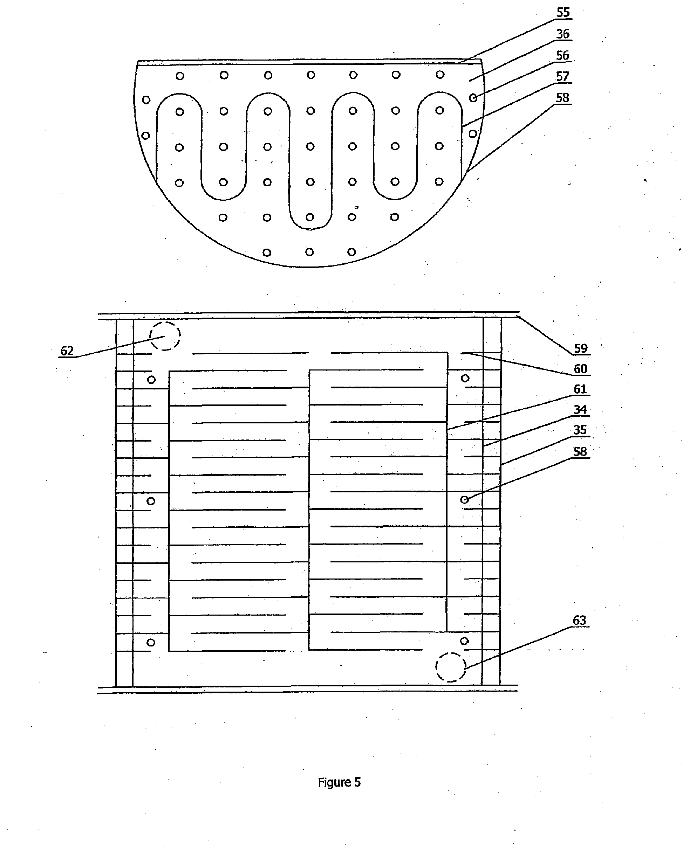

On the screen plate 36 shown in Figure 5 the liquid level generated by the barrier 55 in equilibrium state will be constant, that is the condensing compound and quantity of the liquid dripping through holes 56 are identical.

The repeated condensation of oil vapours evaporating from the boiler will generate already products, said products will be pumped to the location of the storage through side conduit 37, technological stirrer 45 and conduit 46. The moving-on of solid contaminants delivered by gust like air motion generated by an adventitious change of pressure will be eliminated by packing 32 of Rushing rings, which are the throttling elements of the stream by their spray catching effect. Blowing-off of these is carried out through the conduit 39 periodically. Cooling of screen plates 36 is carried out by heat absorption of cooling liquid containing 30% glycol, flowing through cooling pipes 57 connected to cooling jacket 33 constituted by inside jacket 34 and outside jacket 35. Said liquid from cooling unit I 40 provided with a blower, entering the outgoing stub 62 and flowing between horizontal guides 60 and vertical guides 61 is carried to connection 58, then delivered towards cooling unit I 40 through return stub 63 led out below a pair of flanges constituted by lower and upper flanges 59 bounding the medium section of column 31. Condensation capacity of middle oil fraction is guaranteed by the dimensioning of cooling unit I 40. The mass of the gaseous compound decreases as passing forward, so does the resistance of the system. Gases flow in air coolers 42 free. The second reflux cycle begins at the lower point of the first member. The condensate of the column is discharged into the reflux vessel 43 by said reflux cycle, from there the liquid is delivered to the content of the boiler 38 of column 31 through the reflux conduit 44 by a pump. The light oil fraction condensing on further members of air cooler 42 is led off towards technological stirrer 45 through conduit 47. Vapours of pyrobenzine products with a boiling point of 50 to 150 degrees centigrade are led out from air cooler 42, and several percents of water are condensed in water cooler 50, at the bottom of which said compound enters and its gases are carried into technological stirrer 45 through gas conduit 51. Cooling capacity of the water cooler 50 is guaranteed by the cooling unit II 49. The cooling pipes of said cooling unit II 49 enter at the dome of water cooler 50. The water content of pyrobenzine is separated and let towards the collector 54 by the Florentini vessel 53, while the product from the Florentini vessel 53 is pumped from a fore tank to the location of the collection.

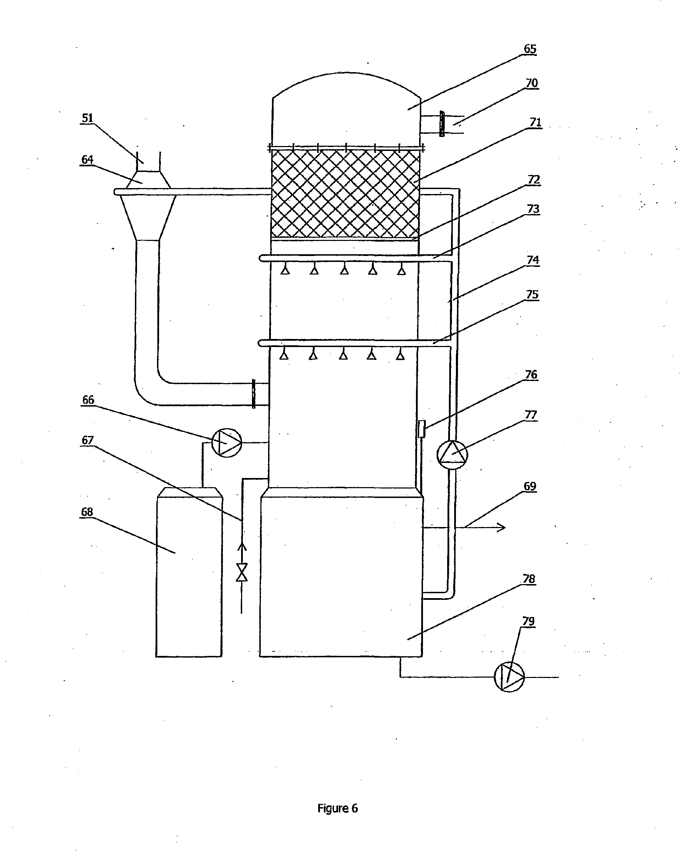

As shown in Figure 6 gases still containing benzine are carried from the water cooler 50 through conduit 51 into the Venturi washer 64 where their flow is accelerated. Said gases are treated with dilute NaOH solution spray in the crosscurrent of nozzles of the washing circle fed by wash conduit 74. Operation of nozzles of wash conduits 73 and 75 is similar, by the help of them gases are released from inorganic acid residues. A spray catcher is provided on the screen 72 for making the aerosol let out from the liquid separating system drop-free. The spray catchers operating in the gas treating system are applied for slop separation. Purified gases from washer 65 will travel towards the compressor station through conduit 70, while the content of the lower container 78 is separated through a spill box in the Florentini vessel 53. Wash slurry is discharged by the slurry pump 79 periodically. Delivery of ion-exchanged supplementary water through conduit 67 is guaranteed by the level control of lower container 78. Upon the sign of the pH meter 76 30% NaOH solution is delivered from the lye container 68 to the lower container 78 by means of the membrane pump 66. In the case pH decreases below the value 6.0, fast stage of the membrane pump 66 is actuated, and reaching the value pH = 7.0 the apparatus will be cut off. According to the operating experience pH can be held between values of 5.5 and 8.0. The flow of the dilute alkali solution is maintained by the circulation pump 77.

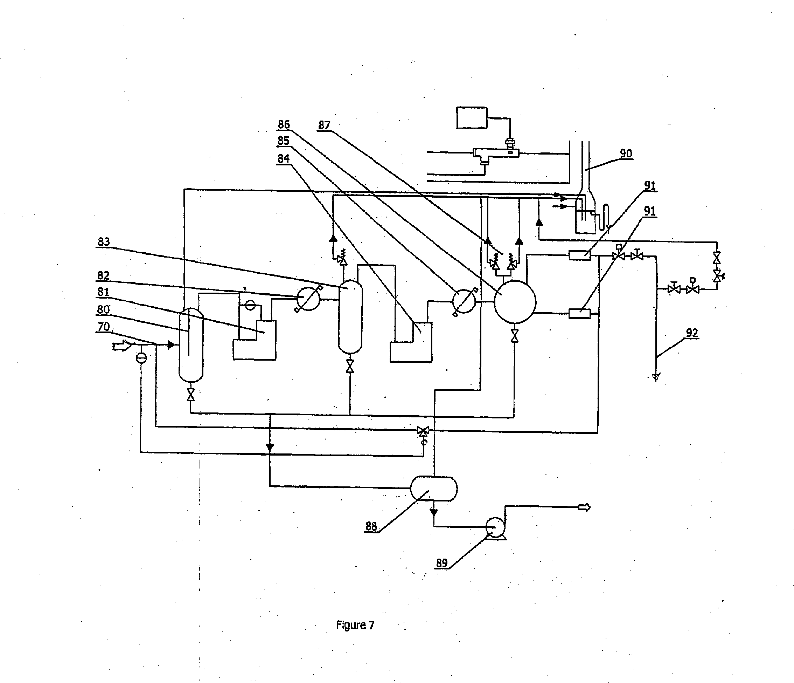

As shown in Figure 7 pyrogas is received continuously in the compressor block from the washer 65. Its quantity is measured and controlled by a flowmeter signalling at the lower limit. The gas then enters the spray catcher container 80 on the inlet side. Said container is divided in two parts inside. In the case the two-stage compressor 81 and 84 is not in operation the gas can be blown off on torch 90. First the gas enters the compressor stage I 81. The liquid separated adventitiously in spray catcher container 80 is let further to the slop tank 88 by a level switch signalling at the lower and the upper limit. The spray catcher container 83 is protected against overpressure by a safety valve set to 2.5 bar. The gas enters the compressor stage II 84 through the demister of spray catcher container 83, pressure of the gas is compressed from gas pressure of about 2 bar to storage pressure of 20 bar by said compressor stage II 84. The compressors 81 and 84 are blocked by a temperature block located on the delivery side in case the outlet temperature of the gas is too high. The gas is cooled to storage temperature by heat exchanger 85. The temperature change on waterside can be adjusted on site by a needle valve and the outlet temperature of the water can be read on the local thermometer. The gas in the gas tank 86 is stored at a pressure of 20 bar and a temperature of 40 degrees centigrade. Pressure and temperature of gas tank 86 are shown also by instruments on site; and liquid level is also measured. Gas tank 86 is protected against overpressure by a double safety valve set to 25 bar. Among these conditions the stored material is of mixed phase. Pressure of the gas phase is reduced to the pressure stage of the block burners 21 of the reactor 17. Pressure of the liquid phase is reduced by the reducer-evaporator 91, the material of reduced pressure is kept in gas phase by said reducer-evaporator 91. After this the two branches are conjoined. Pressure and temperature of joint branch 92 are measured by an instrument giving sign both at the lower and the upper limit. Gas can be let into the gas collecting conduit by opening an opening assembly and by a needle valve. Slop generated during operation is collected in the slop tank 88, level of which is shown by a level indicator. Said slop then may be dumped from said slop tank 88 by slop pump 89. The tank is breathing operationally to the torch 90. The torch 90 comprises a water seal having two functions. On one hand it guarantees that air cannot get into the system from the direction of the torch 90, on the other hand keeps the appropriate air pressure for the compressors 81 and 84. In this way gas normally gets to the compressors 81 and'84. In the case the device is out of operation for some reason or pressure increases above 0.2 bar before the compressor, gas forcing through the gas lock with a height of 2 m passes to the torch 90. The apparatus can be ignited by sparkling. Inert gases are discharged free, while combustible but incompressible gases may be blown off by igniting or may be led to the burners of an auxiliary heating apparatus by the help of required counter pressure. In this case heat-removal should be provided because of the intermittent stoking.

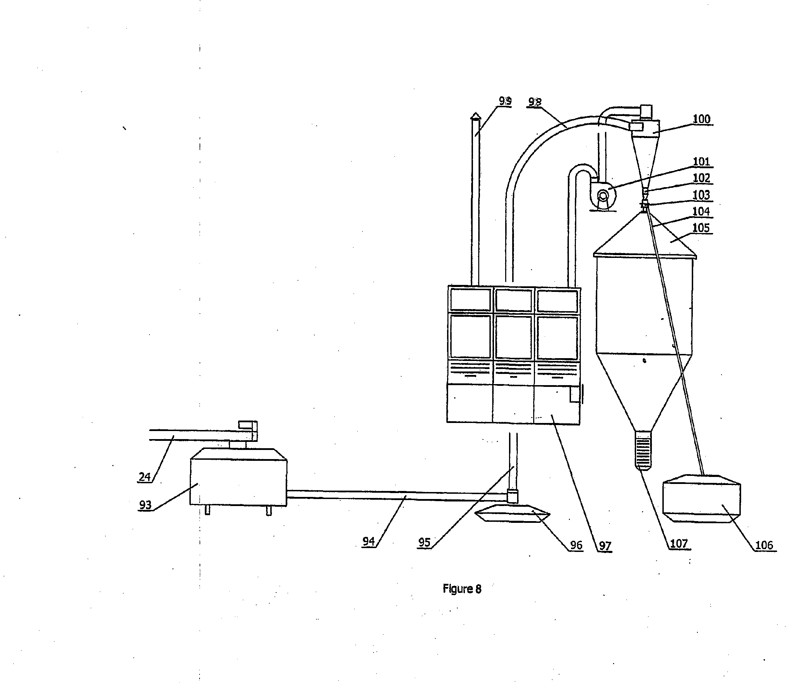

Solid powdered coal with a temperature of about 300 degrees centigrade is stacked in the carbon black container 23 according to the Figure 8 applied for storing carbon black. The case of screw feeder 24 will be filled, so slag pushing is closed in the direction of the pneumatic system. The material is not ignited in the still reducing medium, a temperature of about 900 degrees centigrade would be required to effect the ignition. The material in the heat-proof screw feeder 24 is dumped towards the carbon black container 93, where it is cooled significantly during delivery. The further-delivery is carried out by the help of the suction effect of carbon black blower 101. The powder mixed with multiplied quantity of water through the conduit-pipe of the pneumatics 94 travels to the cyclone 100 through the rising conduit 95, while coarse iron remainder cannot be entrained by the air flow and falls into iron tank 96. The bottom product of cyclone 100 is treated by magnetic separator 102. The conveyor below cyclone 100 is a short horizontal travel on which steel grits are separated by a constant magnetic zone collecting them in container 106 through the hopper of the conduit 104. The metal free carbon black passes into a cellular feeder, then into the bin 105. From here it can be dumped for transport by an intermittent vehicle loader.

The excess air of carbon black blower 101 is lead out through the filter 97 to the exhauster 99, where it is let out powder free.

Beyond the configuration realizing the main technology shown in Figure 2 an essential, going beyond the art and much more modern device than the previous ones is the reactor 17 shown in more details I Figure 9.

The speciality of reactor 17 is that the batching stub 108 receiving the batching gate valve 14 is in a lifted position due to the extension of the neck. This serves to eliminate direct heat effects affecting the assembly.

Further on the conduit 109 at the end of the cycle a magnetic valve 110 is provided for controlling inlet of the liquid content of cyclone 26 into the primary reflux cycle during the decrease of gas flow to maintain the set volume flow rate.

The reactor 17 has a stepped sealing 111 following heat-dilatation of inside chamber 19, for providing massiveness for the combustion chamber 118.

Suspension and free movement of bundle of pipes 113 is made possible by suspension means 112 consisting of steel bands fixed to upper flange of combustion chamber 118.

According to a preferred construction of a combined hub 114 it comprises a tubular shaft built on an inner solid shaft to reduce the inner cold zone and to reduce the stress on inner shaft as a slim body.

A preferred materials-handling is generated by an open-spiral worm 115 in the inside chamber 19 through loosening and delivering the grinds to outer radius.

Quantity of introduced heat is increased by 5% to 6% by applying of heat deflecting ribs 116, their sectional installing affects advantageously the flue gas flow of the combustion chamber.

The lower member is divided by applying a bottom plate 117, so the device can be assembled fast and easily.

Advantages of the embodiment according to the invention among others are as follows:

Continuous production can be provided by complementary volumes of two concurrently operating reactors.

Coarse grinds can be introduced into the system through safe sluicing.

Two reflux cycles are provided to guarantee a yield of larger proportion of white products in the produced products and the purity of said products by recracking and repeated distillation, respectively.

A stable quality of liquid products is guaranteed by condensation system through applying column distillation and end cooling.

The construction is cost-effective, therewith especially in case of carbon black products, powdered coal of perfect quality is produced due to complete gasification.

Metal selection also meets the expectations and fits the processing line.

The device can be installed and embodied anywhere.

### REFERENCE NUMBERS

- 1: conveyor
- 2: shredder with tearing discs
- 3: concurrent cylinders
- 4: auxiliary hydraulics
- 5: sorting screen
- 6: auxiliary cylinders
- 7: trough
- 8: trough screw
- 9: bucket applicator
- 10: feeding screw
- 11: metering container
- 12: batching screw
- 13: cram screw
- 14: batching gate valve
- 15: chimney stub
- 16: heat exchanger
- 17: reactor
- 18: dome lid
- 19: inside chamber
- 20: agitator mechanism
- 21: block burners
- 22: screw drive
- 23: container
- 24: heat-proof screw feeder
- 25: pulse tube
- 26: cyclone
- 27: vapour conduit
- 28: reflux container
- 29: conduit
- 30: disc lock
- 31: column
- 32: packing
- 33: cooling jacket
- 34: inside jacket
- 35: outside jacket
- 36: screen plate
- 37: side conduit
- 38: boiler
- 39: conduit
- 40: cooling unit I
- 42: air cooler
- 43: reflux vessel
- 44: reflux conduit
- 45: technological stirrer
- 46: conduit
- 47: conduit
- 48: middle distillate collecting pipe
- 50: water cooler
- 51: conduit
- 52: conduit
- 53: Florentini vessel
- 54: collector
- 55: barrier
- 56: hole
- 57: cooling pipe
- 58: connection
- 59: lower and upper flanges
- 60: horizontal guide
- 61: vertical guide
- 62: outgoing stub
- 63: return stub
- 64: Venturi washer
- 65: washer
- 66: membrane pump
- 67: conduit
- 68: lye container
- 70: conduit
- 71: packing zone
- 72: screen
- 73: wash conduits
- 74: wash conduit
- 75: wash conduits
- 76: pH meter
- 77: circulation pump
- 78: lower container
- 79: slurry pump
- 80: spray catcher container
- 81: compressor stage I
- 82: heat exchanger
- 83: spray catcher container
- 84: compressor stage II
- 85: heat exchanger
- 86: gas tank
- 88: slop tank
- 89: slop pump
- 90: torch
- 91: reducer-evaporator
- 92: joint branch
- 93: container
- 94: conduit-pipe of the pneumatics
- 95: conduit
- 96: iron tank
- 97: filter
- 98: bend
- 99: exhauster
- 100: cyclone
- 101: carbon black blower
- 102: magnetic separator
- 103: cellular feeder
- 104: conduit
- 105: bin
- 106: container
- 107: vehicle loader
- 108: batching stub
- 109: conduit
- 110: magnetic valve
- 111: stepped sealing
- 112: Suspension means
- 113: bundle of pipes
- 114: combined hub
- 115: open-spiral worm
- 116: heat deflecting rib
- 117: bottom plate
- 118: combustion chamber

## Claims

1. Device for pyrolyzing miscellaneous coarse rubber grinds containing mainly metal/rubber and for separating the gained products, said device comprising a mechanism for preparing and batching grinds, a pyrolysis reactor (17), burners located in its combustion chamber (118), an agitator mechanism (20), cooling mechanisms, supply lines, and units for treating and processing gases, liquids and solids, wherein a batching gate valve (14) suitable gas-proof locking is formed between its feeding system (10, 11, 12, 13) and inside chamber (19) of its reactor (17) as a lower bounding element of a cram screw (13); and the batching stub (108) receiving the batching gate valve (14) is in a lifted position related to the reactor (17) due to the raised configuration of the neck of the dome; its agitator mechanism (20) is constituted by an open-spiral worm (115) and combined with a dredging element, a bundle of pipes (113) is arranged on the wall of the reactor (17) within its combustion chamber (118) and the device is provided with a column (31) with lines of screen plates (36) for fine separating of liquid compounds.

2. A device according to claim 1, wherein said device comprises a shredder with tearing discs (2) for preparing the material to be processed, a sorting screen (5) for sorting the material, a trough screw (8) forwarding the material, and a bucket applicator (9).

3. A device according to claim 1, wherein a bucket applicator (9) hopper is connected to a feeding screw (10) after which a metering container (11) having adjustable volume through its side plates is arranged.

4. A device according to claim 1, wherein the agitator mechanism (20) having dredging elements expediently comprises a drive (22) connected to a stuffing-box shaft.

5. A device according to claim 1, wherein said device comprises more, concurrently operable reactors (17).

6. A device according to claim 1, wherein a vapour conduit (27) is connected to a boiler (38), the lower member of its column (31) containing screen plates (36) and cooling elements, the screen plates (36) are provided with barriers (55) and have cooling pipes (57).

7. A device according to claim 1, wherein said device comprises two reflux cycles for obtaining liquid components.

8. A device according to claim 1, wherein said device comprise a water cooler (50) for condensing light distillates and an air cooler (42) for separating heavy distillates.

9. A device according to claim 1, wherein said device comprises a torch (90) for blowing-off inert and incompressible gas components.

10. A device according to claim 1, wherein said device has means for obtaining metal residues from cooled slag.

## Patentansprüche

1. Vorrichtung zum Pyrolysieren verschiedener groben Kautschukmahlgut enthaltend hauptsächlich Metall/Kautschuk und zur Trennung der gewonnenen Produkten, die genannte Vorrichtung enthält einen Mechanismus zur Herstellung und Dosierung von Mahlgut, mehrere, in seiner Verbrennungskammer (118) angebrachten Brenner eines Pyrolysereaktors (17), ein Rührwerk (20), Kühlmechanismen, Versorgungsleitungen, und Einheiten für die Behandlung und Verarbeitung von Gasen, Flüssigkeiten und Feststoffen, wobei eine zu einer gasdichten Verriegelung geeignete Dosierungsabsperrschieber (14) zwischen ihrem Zuführungssystem (10, 11, 12, 13) und einem inneren Kammer (19) ihrer Reaktor (17) als eine untere Begrenzungselement einer Verdichtungsschraube (13) ausgebildet ist; und der Chargestutzen (108), der den Dosierungabsperrschieber (14) aufnimmt, sich in einer angehobenen Position verglichen mit dem Reaktor (17) befindet wegen der erhöhten Konfiguration des Halses der Kuppel; ihre Rührwerk (20) durch eine offene Spiralschnecke (115) gebildet und mit einem Baggerelement kombiniert ist, ein Bündel von Rohren (113) an der Wand des Reaktors (17) in ihrer Verbrennungskammer (118) angeordnet ist, und die Vorrichtung mit einer Säule (31) mit Reihen von Siebplatten (36) zur Feintrennung von Flüssigkeitskomponenten versehen ist.

2. Vorrichtung nach Anspruch 1, wobei die genannte Vorrichtung einen Schredder mit Reißscheiben (2) zur Herstellung des zu verarbeitenden Materials, einen Sortiersieb (5) zum Sortieren des Materials, eine Förderschnecke (8) zum Weiterleiten des Materials, und einen Eimerkettenförderer (9) enthält.

3. Vorrichtung nach Anspruch 1, wobei ein Trichter eines Eimerkettenförderers (9) mit einer Förderschnecke (10) verbunden ist, nach der ein Dosierbehälter (11) mit einem mittels seiner Seitenplatten einstellbaren Volumen angeordnet ist.

4. Vorrichtung nach Anspruch 1, wobei das über Baggerelemente verfügende Rührwerk (20) zweckmäßigerweise einen Antrieb (22) enthält, der mit einer Stopfbuchsenwelle verbunden ist.

5. Vorrichtung nach Anspruch 1, wobei die genannte Vorrichtung mehrere gleichzeitig betreibbare Reaktoren (17) enthält.

6. Vorrichtung nach Anspruch 1, wobei eine Dampfleitung (27) einem Kessel (38) angeschlossen ist, wobei das untere Element seiner Säule (31) Siebplatten (36) und Kühlelemente enthält, die Siebplatten (36) mit Barrieren (55) versehen sind und Kühlrohre (57) aufweisen.

7. Vorrichtung nach Anspruch 1, wobei die genannte Vorrichtung zwei Rückflusszyklen zum Erhalten von flüssigen Komponenten enthält.

8. Vorrichtung nach Anspruch 1, wobei die genannte Vorrichtung einen Wasserkühler (50) zum Kondensieren von leichteren Destillaten und einen Luftkühler (42) zum Abscheiden von schweren Destillaten umfasst.

9. Vorrichtung nach Anspruch 1, wobei die genannte Vorrichtung eine Fackel (90) zum Wegblasen der inerten und nicht komprimierbaren Gaskomponenten umfasst.

10. Vorrichtung nach Anspruch 1, wobei die genannte Vorrichtung Mittel zum Erhalten von Metallrückständen aus der gekühlten Schlacke enthält.

## Revendications

1. Dispositif de pyrolyse caoutchouc grossière diverses moutures contenant principalement métal / caoutchouc, formé à partir de mauvaise qualité et pour séparer les produits obtenus, ledit dispositif comprenant un mécanisme pour la préparation et le dosage broie, un réacteur de pyrolyse, brûleurs situés dans sa chambre de combustion, un mécanisme d'agitation, de refroidissement des mécanismes, des lignes d'alimentation et les unités de traitement et de traitement des gaz, des liquides et des solides, dans lequel une vanne de dosage (14) adapté pour verrouillage étanche au gaz est formé entre le système d'alimentation (10, 11, 12, 13) et la chambre intérieure (19) de son réacteur (17) comme un élément inférieur de délimitation d'une vis de cram (13); et le talon de dosage (108) recevant le vanne de dosage (14) est dans une position soulevée en rapport avec le réacteur (17) en raison de la configuration relevé du col du dôme; le mécanisme agitateur (20) est constitué par une ver (115) ayant une forme de spirale ouverte et associé à un élément de dragage, un faisceau de tubes (113) est disposé sur la paroi du réacteur (17) à l'intérieur de sa chambre de combustion (118) et le dispositif est pourvu d'une colonne (31) avec des lignes de plaques de tamis (36) pour la séparation des fines de composés liquides.

2. Dispositif selon la revendication 1, dans lequel ledit dispositif comprend un broyeur à déchirer les disques (2) pour de préparation du matériau à traiter, un écran de triage (5) pour trier la matière, une vis transporteuse (8) transmettant le matériau, et un applicateur de godet (9).

3. Dispositif selon la revendication 1, dans lequel une trémie de l'applicateur de godet (9) est reliée à une vis d'alimentation (10), après quoi un récipient de dosage (11) ayant un volume réglable par l'intermédiaire de ses plaques latérales est disposé.

4. Dispositif selon la revendication 1, dans lequel le mécanisme agitateur (20) comportant des éléments de dragage comprend avantageusement un entraînement (22) relié à un arbre de presse-étoupe.

5. Dispositif selon la revendication 1, dans lequel ledit dispositif comprend plusieurs réacteurs (17) opérables simultanément.

6. Dispositif selon la revendication 1, dans lequel un conduit de vapeur (27) est relié à une chaudière (38), l'élément inférieur de la colonne (31) contenant des plaques d'écran (36) et des éléments de refroidissement, les plaques d'écran (36) sont prévus avec des barrières (55) et ont tuyaux de refroidissement (57).

7. Dispositif selon la revendication 1, dans lequel ledit dispositif comprend deux cycles de reflux pour obtenir des composants liquides.

8. Dispositif selon la revendication 1, dans lequel ledit dispositif comprend un refroidisseur d'eau (50) pour condenser les distillats légers et un refroidisseur d'air (42) pour séparer les distillats gros.

9. Dispositif selon la revendication 1, dans lequel ledit dispositif comprend une lampe de poche (90) pour souffler en composants de gaz inertes et incompressibles.

10. Dispositif selon la revendication 1, dans lequel ledit dispositif comporte des moyens pour obtenir des résidus métalliques à partir de scories refroidi.
